# EUROPEAN PATENT SPECIFICATION

(11) **EP 2 520 196 B1**
(45) Date of publication and mention of the grant of the patent: **04.06.2014**
(21) Application number: 12002980.6
(22) Date of filing: 27.04.2012
(51) Int. Cl.: A47B 57/18, A47B 57/40, A47B 57/44, B65G 1/14

(54) **Modular shelves structure**
Modulare Regalstruktur
Structure modulable d'étagères

(30) Priority: 02.05.2011 IT VI20110113
(43) Date of publication of application: 07.11.2012
(73) Proprietor: Filippi, Stefania, 32046 San Vito di Cadore (BL) (IT)
(72) Inventor: Filippi, Stefania, 32046 San Vito di Cadore (BL) (IT)
(74) Representative: Maroscia, Antonio

(56) References cited:
- FR-A1- 2 649 303
- GB-A- 758 003
- JP-A- 2010 162 184
- JP-U- H0 591 441

## Description

### Field of the invention

The present invention generally finds application in the field of furniture for civil or industrial use, and particularly relates to a modular shelving structure for home, office or industrial use.

### Background art

Modular metal shelves, having of light-duty type for home and office use or of heavy-duty type for industrial warehouses, are known to comprise a plurality of vertical posts, with one or more shelves fixed thereto.

Particularly, the posts have a plurality of vertically aligned through holes or slots, for the shelves to be mounted at different heights as needed.

The shelves also have through holes at their side walls, which are adapted to be aligned with the holes or slots of the posts for mutual anchoring thereof by means of screws or bolts.

Nevertheless, this kind of shelving involves complex assembly and dismantling. Furthermore, the bolts may loosen with time, and affect the stability of the structure.

In an attempt to obviate these drawbacks, shelving solutions have been suggested in which the connection between shelves and posts is obtained by joint means having male and female members associated with the posts and the shelves and designed for mutual structure-assembling engagement.

One example of this shelving solution is disclosed in IT1282020, in which each shelf has anchoring hooks, which are designed to be introduced into respective slots tapering in the direction of the bracket for mutual interference fit.

JP 2006014790 discloses a shelving structure having metal cross members with pairs of hooks formed therein, and designed to be introduced into correspondingly shaped slots of the posts.

The posts also have holes for receiving further pins projecting out of the brackets, for firmer coupling.

While these solutions have been found to ensure very simple assembly and stability with time, they still suffer from certain drawbacks.

Particularly, these shelving assemblies can be only used with shelves, boards or brackets that have been appropriately processed to form hooks, and do not allow mounting of traditional shelves with holes adapted for bolt engagement, whereby they afford poor flexibility and have a high cost.

Furthermore, the posts with specially shaped slots require a single positioning direction, thereby restricting the possibilities of combining posts and shelves to form combined shelving systems.

### Disclosure of the invention

The object of this invention is to obviate the above drawbacks, by providing a modular shelves structure that affords high flexibility of use.

A particular object is to provide a modular shelving structure that can be configured in multiple combinations.

A particular object is to provide a modular shelving structure that allows use of both interlocked and bolted shelves.

Another object is to provide a modular shelving structure that affords easy assembly.

These and other objects, as better explained below, are fulfilled by a modular shelving structure as defined in claim 1.

With this particular configuration, both one or more conventional shelves designed to be fixed by bolts and shelves with joint systems may be anchored to the posts, which will provide a greater number of configurations for the structure.

Advantageous embodiments of the invention are obtained in accordance with the dependent claims.

### Brief description of the drawings

Further features and advantages of the invention will be more apparent from the detailed description of preferred, non-exclusive embodiments of the structure of the invention, which are described as nonlimiting examples with the help of the annexed drawings, in which:
FIG. 1 is a perspective view of a shelving structure of the invention;
FIG. 2 is an enlarged perspective view showing a part of the structure of Fig. 1, with one shelf being omitted;
FIG. 3 is an exploded view of the structure of Fig. 1;
FIG. 4 is an enlarged view of a first detail of Fig. 3;
FIG. 5 is an enlarged view of a second detail of Fig. 3;
FIG. 6 is a perspective view of a portion of a post that is part of a structure of the invention, in a first preferred configuration;
FIG. 7 is a view taken along a plane of a detail of a post that is part of the structure of the invention, in a second preferred configuration;
FIG. 8 is a view taken along a plane of the detail of the post of Fig. 6;
FIG. 9 is a front view of a bracket that is part of the structure of Fig. 1;
FIG. 10 is a side view of the bracket of Fig. 9.

### Detailed description of a preferred embodiment

Referring to the above figures, a modular shelving structure of the invention, generally designated by numeral 1, is preferably a light-duty metal structure intended for home or office use.

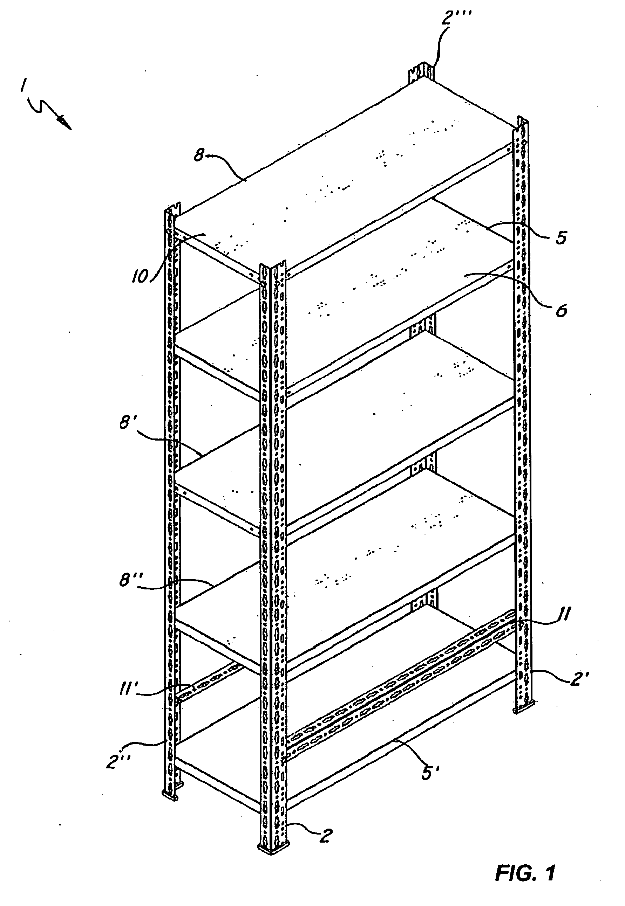

As shown in Fig. 1, the structure comprises a plurality of elongate posts 2, 2', 2", 2"', which are designed to be assembled in substantially vertical and mutually parallel positions.

Unless otherwise stated, for simplicity the posts will be hereinafter designated by non-indexed numbers, anything concerning the post 2 being intended to be found in a substantially similar and functionally equivalent manner in the other posts 2', 2", 2"'.

Each post 2 has at least one pair of substantially flat and perpendicular longitudinal walls 3, 4.

The structure 1 further comprises a plurality of shelves 5, 5', 5", 8, 8', 8", each having a main wall 6, 10 designed to support one or more objects and corresponding folded peripheral edges, 6', 10' respectively, generally at right angles.

Each shelf 5, 5', 5", 8, 8', 8" is designed to be removably anchored to each post 2 with its main wall 6, 10 in a substantially horizontal position by first removable joint anchoring means 7, preferably associated with the folded edges 6', 10'.

Particularly, the plurality of shelves comprises one or more shelves 5, 5', 5" of a first type and one or more shelves 8, 8', 8" of a second type.

The first removable anchoring means 7 include at least one first joint member 12 associated with each post 2 and at least one second joint member 15 fixedly or removably associated with the peripheral edge 6' of the side wall 6 of at least one shelf 5 of the first type.

The second joint member 15 is designed to be selectively and removably anchored to one of the first joint members 12.

According to a peculiar feature of the invention, the structure 1 comprises second anchoring means 9 for removable anchoring by screws, bolts or the like, having at least one first through hole 16 or slot 17 associated with each post 2.

Furthermore, the second anchoring means 9 include at least one second hole 19 or slot 20, also preferably of through type, which is associated with at least one shelf 8 of the second type and designed for firm coupling to one of the first holes 16 or slots 16 by fastening of a screw or bolt 18 or a similar member.

Thus, the shelf 8 of the second type can be also removably anchored to the posts 2 with its main wall 10 in a substantially horizontal position, and vertically offset with respect to a shelf 5 of the first type.

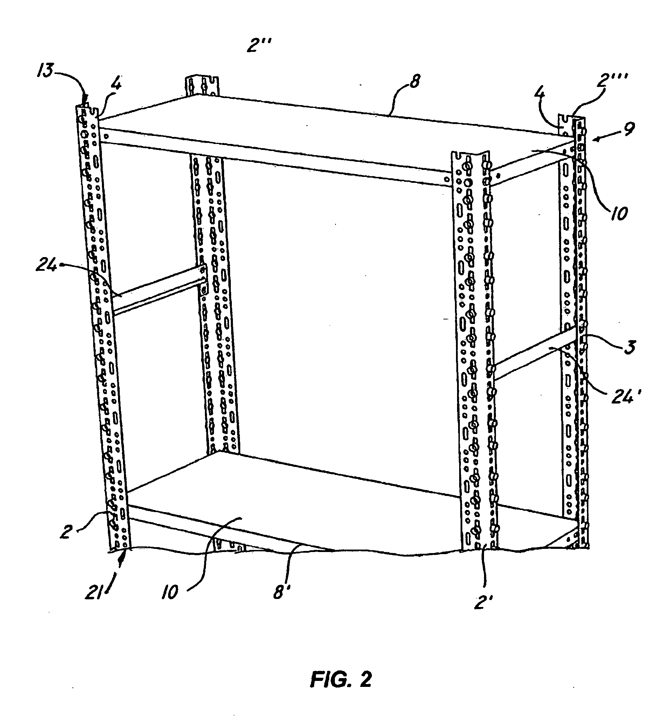

As shown in Figs. 1 and 2, the structure 1 comprises four lateral posts 2, 2', 2", 2"' coupled to two shelves 5, 5' of the first type, which are associated with the first joint anchoring means 7 and to three shelves 8, 8', 8" of the second type associated with the second screw or bolt anchoring means 9, having second through holes 19 or slots 20 at the folded edge 10' of their wall 10.

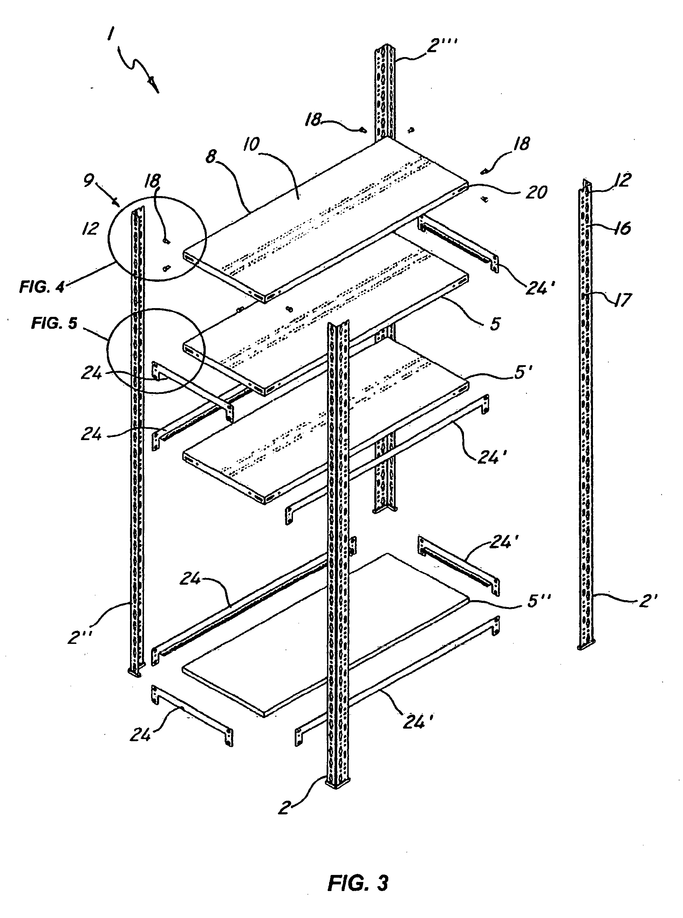

The configuration of Fig. 3 comprises a single shelf 8 of the second type associated with second anchoring means 8 and three shelves 5, 5', 5" of the first type having second joint anchoring members 15.

Unless otherwise stated, the shelves and their parts, as well as the members of the first 7 and second 9 anchoring means will also be hereinafter designated by non-indexed numbers, anything concerning one of the first and second shelves or their parts, and the members of the first and second anchoring means, being intended to be also found in a substantially similar and functionally equivalent manner in the other shelves and members, respectively.

The posts 2 will be placed at the corners of the structure 1 for connection with the shelves 5, 8 at corner portions of the folded edges 6', 10' of the side walls 6, 10 thereof.

Nevertheless, it should be understood that the number of posts and/or shelves 5, 8 may be also different from that of the illustrated configuration, as needed, and as is known in the art.

As shown in Figs. 1 and 2, pairs of posts 2, 2'; 2", 2"' may be mutually joined by substantially horizontal stiffening cross members 11, 11' removably anchored to the posts 2 by third anchor means that may be similar to the first 7 and/or second anchoring means 9.

Conveniently, the first anchor means 7 comprise a plurality of first joint anchoring members 12, associated with the posts 2 and arranged on each of the longitudinal walls 3, 4 thereof along respective substantially longitudinal first rows 13 to define, on the assembled structure 1, series 14 of first members 12 substantially aligned on respective substantially horizontal planes.

The shelf 5 of the first type will in turn have a plurality of second anchoring members 15 associated with its side wall 6, preferably at the folded edge 6', which are adapted to be coupled by interlocking arrangement to respective first members 12 of one horizontal series 14, such that its main wall 6 is substantially horizontal, in the assembled state.

The second anchoring means 9 in turn comprise a plurality of first through holes 16 and/or slots 17 formed in each of the vertical walls 3, 4 of each post 2.

Such first holes 16 and/or slots 17 are vertically aligned with one another and with first anchoring members 12 of respective first vertical rows 13, in alternate arrangement therewith.

In practice, each first row 13 includes a plurality of first anchoring elements 12 in vertically aligned relation, with one or more first holes 16 and/or slots 17 interposed therebetween in predetermined sequences, for coupling thereof to a respective shelf 8 of the second type by means of screws or bolts 18.

The second anchoring means 9 will also comprise a plurality of second through holes 19 and/or slots 20 formed in the side walls 10 of the second shelves 8, preferably at the folded edges 10', and adapted to be horizontally aligned with respective first holes 16 and/or slots 17, for the passage of respective screws or bolts 18 and tightening thereof.

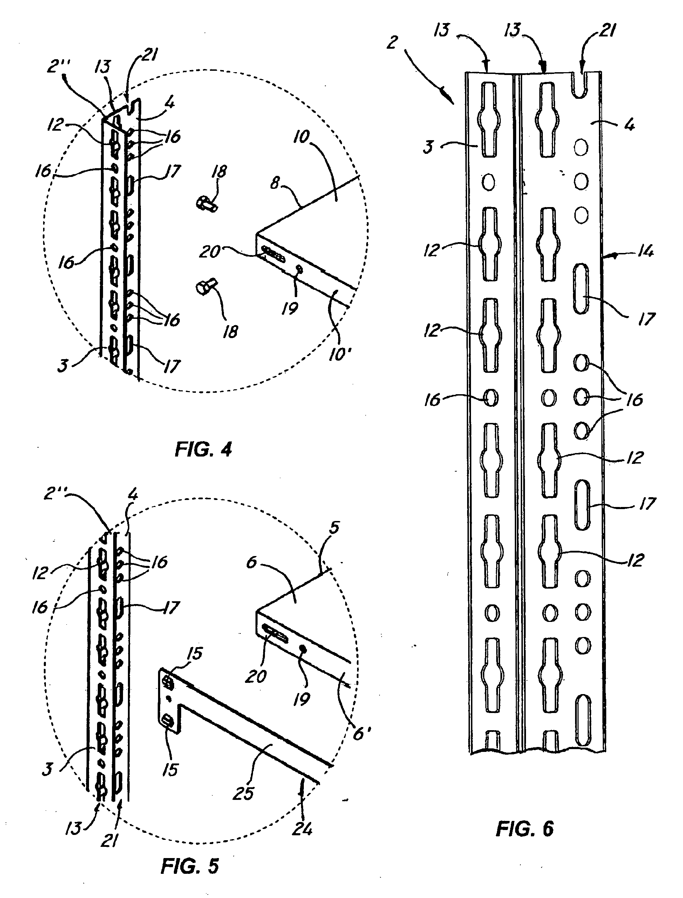

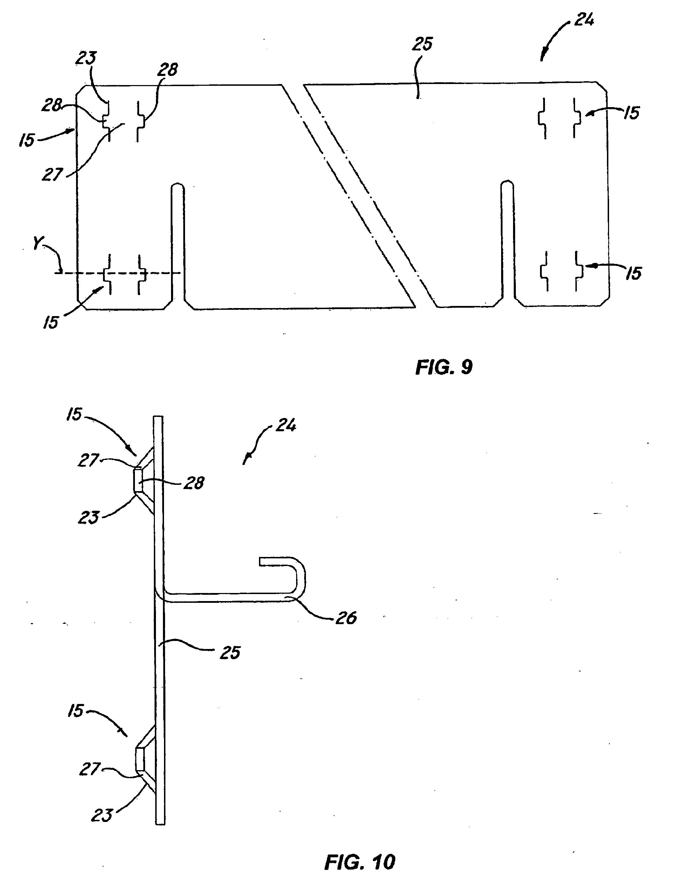

Conveniently, one or more posts 2 may have a longitudinal wall 3 with a single vertical row 13 of first anchoring elements 12 alternating with first holes 16 and/or slots 17, and a second vertical wall 4 also having a second substantially vertical row 21, transversely offset with respect to the corresponding first row 13 and comprising additional first anchoring elements 12 and/or first holes 16 and/or slots 17, as more clearly shown in Figs. 6 and 9.

Advantageously, at least one of the first holes 16 of the second row 21 is horizontally aligned with first holes 16 of first rows 13 of the same post 2.

Furthermore, the second row 21 comprises at least one substantially longitudinal slot 17 at least partially transversely aligned with a pair of successive first connecting members 12 of the first row 13 formed on the same longitudinal wall 4.

Preferably, the second row 21 is only associated with the second anchoring means 9, which means that it does not include first joint anchoring members 12, although it may be otherwise.

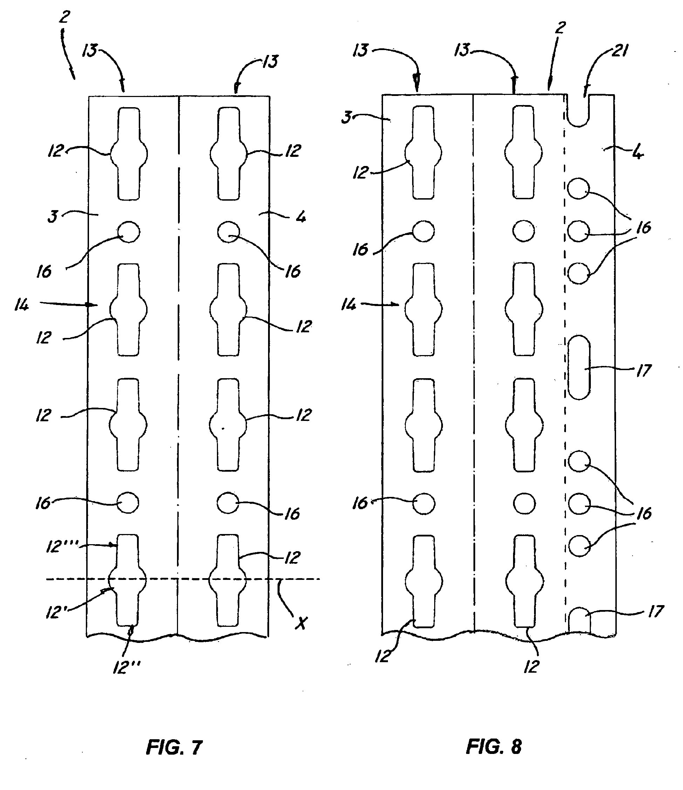

Furthermore, a structure 1 may include both posts 2 having both walls 3, 4 with a single row 13, like in Fig. 7, and posts 2 having one or both walls 3, 4 with two substantially parallel rows 13, 21.

This combination of features may increase the number of possible assembly combinations.

Thus, the particular arrangement of the first 7 and second 9 anchoring means allows two or more posts 2 to be positioned at any mutual orientation, provided that they maintain their vertical position, and to be possibly juxtaposed with multiple patterns, while always ensuring overlap of respective joint members 12 and respective holes 16, 19 or slots 17, 20, or overlap of holes or slots 16, 17, 19, 20 over first joint members 12.

In a preferred, non-limiting configuration of the invention, the first anchoring means 7 are of male and female type.

Particularly, the first anchoring members 12 associated with the posts 2 are specially shaped slits defining respective female members

The second anchoring members 15 include each a respective specially shaped transverse projection 23, defining a corresponding male member, which is designed to be selectively introduced into a corresponding shaped slit 12 of one of the posts 2.

Nevertheless, it shall be understood that a reversed configuration may be envisaged, with the male members 22 associated with the posts 2 and the female members 12 associated with the shelves 5, without departure from the scope of the present invention.

As is typical for shelving structures, the posts 2 have a plurality of specially shaped slits 12 in vertically aligned relation on the same row 13.

On the other hand, the shelf 5 comprises at least four projections 23, placed at respective corner portions of its side wall 6.

Preferably, the male anchoring members 12 are associated with the peripheral edge 6' of the shelf 5 at mutually parallel sides thereof, e.g. at the short sides only, at the long sides only or at all sides, but always at the corners.

This will allow adjustment of the height of the shelf 5 of the first type, relative to the ground or the support base for the structure 1, also depending on the minimum required spacing between successive shelves 5, 8 over the vertical.

As shown in Figs. 7 and 8, which illustrate details of the posts 2, the shaped slits 12 are longitudinally elongated and substantially symmetrical with respect to a transverse axis X.

Particularly, each shaped slit 12 has an enlarged central portion 12', which has a substantially circular shape in the figures but may also have a quadrangular or polygonal shape, with end portions 12", 12"' tapered in opposite directions to allow upturned positioning of the post 2.

By this arrangement, the post 2 may be used in either orientation, which will simplify the assembly process, because no unique vertical orientation direction is defined.

The transverse projections 23 may be also substantially symmetrical with respect to a transverse axis Y.

In a first variant, not shown, the projections 23 may be integrally associated with the folded edge 6' of the shelves 5 of the first type, i.e. formed by direct cutting and shaping of their material.

In an alternative configuration, as shown in Fig. 2, the shelf 5 of the first type may be anchored to the posts 2 by mans of a pair of interface members, defined by respective brackets 24, 24'.

As more clearly shown in Figs. 9 and 10, the brackets 24, 24' are integral with the projections 23, for interlock coupling with the posts 2.

Preferably, one or two pairs of brackets 24, 24' are provided for each shelf 5 of the first type to be anchored by interlocking engagement, which brackets are associated with the first anchoring means 7 and are adapted to be coupled by interlocking to opposite pairs of posts 2, 2"; 2', 2"'.

Each bracket 24, 24' comprises a first plate 25 which extends, in the assembled structure, in a substantially longitudinal direction and a second plate 26 transversely and orthogonally projecting out of the first plate 25 for supporting the folded edge 6' of the corresponding shelf 5.

Each projection 23 may include a convex body 27, orthogonally projecting out of the first plate 25 and having pairs of lateral appendages 28 substantially parallel to the first plate 25.

The projections 23 are formed on the first plate 25 by direct cutting and shaping of its material.

Advantageously, the overall size of the projections 23 is smaller than that of the central portion 12' of the shaped slits 12, to enable mutual coupling thereof.

Nevertheless, the convex shape of the projection 23 defines a gap between the latter and the first plate 25 which is largest at the center of the projection 23 and decreases towards its ends, to allow the projection 23 and the corresponding slit 12 of the post to slide relative to each other and be coupled by interference fit.

Conveniently, the second plate 26 of each bracket may be formed with an L or U shape, to define both a support surface of the edge 6' of the shelf 5 and an abutment therefore against any horizontal translational movement.

Conveniently, the first plate 25, the second plate 26 and the projections 23 may be formed by mechanical processing, e.g. cutting and bending of the same metal sheet.

The figures show that each bracket 24 has two pairs of projections 23 in vertical aligned relation. The projections 23 of each pair are designed to fit into pairs of slits 12 of the same row 13.

Nevertheless, the number of projections 23 may be different from that of the figures, without departure from the scope of the present invention.

The above disclosure clearly shows that the invention fulfills the intended objects and particularly meets the requirement of providing a modular shelving structure that affords high flexibility and simple assembly.

The structure of the invention is susceptible to a number of changes and variants, within the inventive concept disclosed in the appended claims. All the details thereof may be replaced by other technically equivalent parts, and the materials may vary depending on different needs, without departure from the scope of the invention.

While the structure has been described with particular reference to the accompanying figures, the numerals referred to in the disclosure and claims are only used for the sake of a better intelligibility of the invention and shall not be intended to limit the claimed scope in any manner.

## Claims

1. A modular shelving structure, comprising:
- a plurality of elongate posts (2, 2', 2", 2"') designed to be assembled in substantially vertical and mutually parallel positions, each having at least one pair of substantially flat and perpendicular walls (3, 4);
- a plurality of shelves (5, 5', 5", 8, 8', 8") each having a main wall (6, 10) with a peripheral folded edge (6', 10'), said shelves (5, 5', 5", 8, 8', 8") being designed to be removably anchored to each of said posts (2, 2', 2", 2"') with said main walls (6, 10) in a substantially horizontal position;
wherein said plurality of shelves (5, 5', 5", 8, 8', 8") comprises a first type of shelves (5, 5', 5") having first joint anchoring means (7) for removable anchoring thereof to said posts (2, 2', 2", 2"'),
wherein said first anchoring means (7) comprise at least one first joint anchoring member (12) associated with each of said posts (2, 2', 2", 2"') and at least one second joint anchoring member (15) associated with said peripheral edge (6') of the shelves of said first type (5, 5', 5") and adapted to be selectively coupled to said at least one first joint anchoring member (12);
wherein said plurality of shelves (5, 5', 5", 8, 8', 8") comprises a second type of shelves (8, 8', 8"), different from the first type (5, 5', 5") and having second means (9) for removable anchoring thereof to said posts (2, 2', 2", 2"') using screws or the like,
wherein said second anchoring means (9) include at least one hole or slot (19, 20) associated with the peripheral edge (10') of the shelves of said second type (8, 8', 8") and at least one corresponding hole or slot (16, 17) associated with each of said posts (2, 2', 2", 2"'), for firm mutual coupling thereof by means of a screw (18) or the like;
wherein said first anchoring means (7) comprise at least one pair of brackets (24, 24') and means (26) for removable connection thereof to said peripheral edge (6') of the shelves of said first type (5, 5', 5"), each of said brackets (24, 24') comprising a first plate (25) which extends, in the assembled structure, in a substantially longitudinal direction and a specially shaped second plate (26) transversely projecting out of said first plate (25) for supporting said peripheral edge (6') of the shelves of said first type (5, 5',5")

2. A structure as claimed in claim 1, **characterized in that** said first joint anchoring means (7) comprise a plurality of first joint anchoring members (12) associated with each of said posts (2, 2', 2", 2"') and arranged over each of said longitudinal walls (3, 4) thereof along respective substantially longitudinal first rows (13) to define, on the assembled structure, series (14) of said first members (12) in substantially transversely aligned relation.

3. A structure as claimed in claim 2, **characterized in that** said first anchoring means (7) comprise a plurality of second anchoring members (15) associated with said peripheral edge (6') of the shelves of said first type (5, 5', 5") and adapted to be coupled by interlocking with respective first members (12) of one series (14).

4. A structure as claimed in any preceding claim, **characterized in that** said second anchoring means (9) comprise, for each of said longitudinal walls (3, 4) of said posts (2, 2', 2", 2"'), a plurality of first through holes (16) and/or slots (17), longitudinally aligned and alternating with first anchoring members (12) of respective first longitudinal rows (13).

5. A structure as claimed in claim 4, **characterized in that** said second anchoring means (9) comprise a plurality of second through-holes (19) and/or slots (20) formed on the peripheral edge (10) of said at least one of the shelves (8, 8', 8") of said second type and adapted to be transversely aligned with respective through holes (16) and/or slots (17) of said posts (2, 2', 2", 2"').

6. A structure as claimed in any claim from 3 to 5, **characterized in that** said first anchoring means (7) are of the male/female type, said first anchoring members (12) comprising respective shaped slots defining respective female members, said second anchoring members (15) comprising respective transverse projections (23) defining respective male members designed to be introduced into corresponding shaped female slots (12).

7. A structure as claimed in claim 6, **characterized in that** each of said shaped slots (12) is longitudinally elongated and substantially symmetrical with respect of a transverse axis (X) with end portions (12", 12"') tapered in opposite directions to allow upturned positioning of the respective post (2, 2', 2", 2"').

8. A structure as claimed in claim 6 or 7, **characterized in that** at least one wall (4) of at least one of said posts (2, 2', 2", 2"') comprises a substantially longitudinal second row (21) of said first anchoring members (12) and/or said first through holes (16) and/or slots (17), said second row (21) being transversely offset with respect to the corresponding first row (13).

9. A structure as claimed in claim 8, **characterized in that** at least one of said first holes (16) of said second row (21) is transversely aligned with first holes (16) of both first rows (13) of one post (2).

10. A structure as claimed in claim 8 or 9, **characterized in that** said second row (21) comprises at least one substantially longitudinal slot (17) at least partially transversely aligned with a pair of successive first anchoring members (12) of the first row (13) that are part on the same wall (4).

11. A structure as claimed in any claim from 3 to 10, **characterized in that** each of brackets (24, 24') has said second anchoring members (15).

## Patentansprüche

1. Modulare Regalstruktur mit ist
- einer Vielzahl von länglichen Pfosten (2, 2', 2", 2"'), die ausgelegt sind, in im Wesentlichen senkrechten und gegenseitig parallelen Positionen zusammen gesetzt zu werden, wobei jeder mindestens ein Paar im Wesentlichen flacher und senkrechter Wände (3, 4) aufweist,
- einer Vielzahl von Regalböden (5, 5', 5", 8, 8', 8"), von denen jeder eine Hauptwand (6, 10) mit einer am Rand gefalteten Kante (6', 10') aufweist, wobei diese Regalböden (5, 5', 5", 8, 8', 8") ausgelegt sind, lösbar mit jedem der Pfosten (2, 2', 2", 2"') verankert zu sein und die Hauptwände (6, 10) in einer im Wesentlichen horizontalen Position sind,
wobei diese Vielzahl von Regalböden (5, 5', 5", 8, 8', 8") eine erste Art von Regalböden (5, 5', 5") umfasst mit ersten gelenkigen Verankerungseinrichtungen (7) zu deren lösbarer Verankerung mit den Pfosten (2, 2', 2", 2"'),
wobei diese ersten Verankerungseinrichtungen (7) mindestens ein erstes gelenkiges Verankerungselement (12) umfassen, das jedem dieser Pfosten (2, 2', 2", 2"') zugeordnet ist und mindestens ein zweites gelenkiges Verankerungselement (15), das der Randkante (6') der ersten Art von Regalböden (5, 5', 5") zugeordnet ist und angepasst ist, wahlweise mit diesem mindestens einen ersten gelenkigen Verankerungselement (12) verbunden zu werden,
wobei diese Vielzahl von Regalböden (5, 5', 5", 8, 8', 8") eine zweite Art von Regalböden (8, 8', 8"), die sich von der ersten Art von Regalböden (5, 5', 5") unterscheiden und zweite Einrichtungen (9) aufweisen zu deren lösbarer Verankerung mit den Pfosten (2, 2', 2", 2"') mittels Schrauben oder ähnlichem,
wobei die zweiten Verankerungseinrichtungen (9) mindestens ein Loch oder Schlitz (19, 20) beinhalten, das der Randkante (10') der zweiten Art von Regalböden (8, 8', 8") zugeordnet ist und mindestens ein entsprechendes Loch oder Schlitz (16, 17), das jedem der Pfosten (2, 2', 2", 2"') zugeordnet ist zu deren fester gegenseitigen Verbindung mittels einer Schraube (18) oder ähnlichem,
wobei diese ersten Verankerungseinrichtungen (7) mindestens ein Paar Klammern (24, 24') aufweisen und Einrichtungen (26) zu deren lösbaren Verbindung mit der Randkante (6') der ersten Art von Regalböden (5, 5', 5"), wobei jede dieser Klammern (24, 24') eine erste Platte (25) umfassen, die sich in der zusammen gesetzten Struktur in einer im Wesentlichen longitudinalen Richtung erstreckt und eine besonders geformte zweite Platte (26), die transversal hervorragt aus der ersten Platte (25) zur Unterstützung der Randkante (6') der ersten Art von Regalböden (5, 5', 5").

2. Struktur gemäß Anspruch 1, **dadurch gekennzeichnet, dass** diese ersten gelenkigen Verankerungseinrichtungen (7) eine Vielzahl von ersten gelenkigen Verankerungselementen (12) umfassen, die jedem dieser Pfosten (2, 2', 2", 2"') zugeordnet sind und über jedem der longitudinalen Wänden (3, 4) angeordnet sind entlang jeweils im Wesentlichen longitudinalen ersten Reihen (13), um auf der zusammen gesetzten Struktur Reihen (14) der ersten Elemente (12) in im Wesentlichen transversal ausgerichteter Beziehung zu bilden.

3. Struktur gemäß Anspruch 2,**dadurch gekennzeichnet, dass** diese ersten Verankerungseinrichtungen (7) eine Vielzahl von zweiten Verankerungselementen (15) umfassen, die der Randkante (6') der ersten Art von Regalböden (5, 5', 5") geordnet sind und ausgebildet sind, verbunden zu werden mittels ineinander greifen mit jeweils ersten Elementen (12) einer Reihe (14).

4. Struktur gemäß einem der vorhergehenden Ansprüche, **dadurch gekennzeichnet, dass** diese zweiten Verankerungsein-richtungen (9) für jede der longitudinalen Wände (3, 4) der Pfosten (2, 2', 2", 2"') eine Vielzahl von ersten Durchgangslöchern (16) und oder Schlitzen (17) umfassen, die longitudinal ausgerichtet sind und alternieren mit ersten Verankerungselementen (12) von jeweils ersten longitudinalen Reihen (13).

5. Struktur gemäß Anspruch 4, **dadurch gekennzeichnet, dass** diese zweiten Verankerungseinrichtungen (9) eine Vielzahl von zweiten Durchgangslöchern (19) und oder Schlitzen (20) umfassen, die auf der Randkante (10) des mindestens einen der zweiten Art von Regalböden (8, 8', 8") gebildet ist und angepasst ist transversal ausgerichtet zu sein mit jeweils Durchgangsltichern (16) und/oder Schlitzen (17) der Pfosten (2, 2', 2", 2"').

6. Struktur gemäß einem der Ansprüche 3 bis 5, **dadurch gekennzeichnet, dass** diese ersten Verankerungseinrichtungen (7) von einsteckender/aufnehmender Art sind, wobei die ersten Verankerungselemente (12) jeweils geformte Schlitze aufweisen, die jeweils aufnehmende Elemente bilden und wobei die zweiten Verankerungselemente (15) jeweils transversale Vorsprünge (23) aufweisen, die jeweils einsteckende Elemente bilden, die ausgelegt sind, in die entsprechenden aufnehmenden Schlitze (12) eingeführt zu werden,

7. Struktur gemäß Anspruch 6, **dadurch gekennzeichnet, dass** jeder der geformten Schlitze (12) longitudinal erstreckt und im Wesentlichen symmetrisch ist mit Bezug auf eine transversale Achse (X) mit Endabschnitten (12", 12"'), die geneigt sind in entgegen gesetzten Richtungen, um nach oben gedrehte Positionierung der Pfosten (2, 2', 2", 2"') zu ermöglichen.

8. Struktur gemäß einem der Ansprüche 6 oder 7, **dadurch gekennzeichnet, dass** mindestens eine Wand (4) des mindestens einen der Pfosten (2, 2', 2", 2"') eine im Wesentlichen longitudinale zweite Reihe (21) der ersten Verankerungselemente (12) umfasst und/oder die ersten Durchgangslöcher (16) und/oder Schlitze (17), wobei die zweite Reihe (21) transversal versetzt ist mit Bezug auf die entsprechende erste Reihe (13).

9. Struktur gemäß Anspruch 8, **dadurch gekennzeichnet, dass** mindestens eines der ersten Löcher (16) der zweiten Reihe (21) transversal ausgerichtet ist zu den ersten Löchern (16) von beiden ersten Reihen (13) eines Pfostens (2).

10. Struktur gemäß einem der Ansprüche 8 oder 9, **dadurch gekennzeichnet, dass** die zweite Reihe (21) mindestens einen im Wesentlichen longitudinalen Schlitz (17) aufweist, der mindestens teilweise transversal ausgerichtet ist mit Bezug auf ein Paar aufeinander folgender erster Verankerungselemente (12) der ersten Reihe (13), die zu der selben Wand (4) gehören.

11. Struktur gemäß einem der Ansprüche 3 bis 10, **dadurch gekennzeichnet, dass** jede der Klammern (24, 24') zweite Verankerungselemente (15) aufweist.

## Revendications

1. Structure d'étagères modulaire, comprenant :
- une pluralité de poteaux allongés (2, 2', 2", 2"') conçus pour être assemblés dans des positions substantiellement verticales et réciproquement parallèles, ayant chacun au moins une paire de parois essentiellement plates et perpendiculaires (3, 4) ;
- une pluralité d'étagères (5, 5', 5", 8, 8', 8") ayant chacune une paroi principale (6,10) avec un bord plié périphérique (6', 10'), lesdites étagères (5, 5', 5", 8, 8', 8") étant conçues pour être ancrées de façon amovible à chacun desdits poteaux (2, 2', 2", 2"') avec lesdites parois principales (6,10) dans une position substantiellement horizontale ;
où ladite pluralité d'étagères (5, 5', 5", 8, 8', 8") comprend un premier type d'étagères (5, 5', 5") ayant des premiers moyens d'ancrage raccordés (7) pour l'ancrage amovible de ces dernières aux dits poteaux (2, 2', 2", 2"').
où lesdits premiers moyens d'ancrage (7) comprennent au moins un premier élément d'ancrage raccordé (12) associé à chacune desdits poteaux(2, 2', 2", 2"') et au moins un deuxième élément d'ancrage raccordé (15) associé audit bord périphérique (6') des étagères dudit premier type (5, 5', 5") et adapté pour être accouplé de façon sélective audit au moins premier élément d'ancrage raccordé (12) ;
où ladite pluralité d'étagères (5, 5', 5", 8, 8', 8") comprend un deuxième type d'étagères (8, 8', 8"), différent du premier type (5, 5', 5") et ayant des deuxièmes moyens (9) pour ancrer de façon amovible ces dernières aux dits poteaux(2, 2', 2", 2"') avec des vis ou autres ;
où lesdits deuxièmes moyens d'ancrage (9) comprennent au moins un trou ou fente (19, 20) associé au bord périphérique (10') des étagères dudit deuxième type (8, 8', 8") ou au moins un trou ou fente correspondant (16,17) associé à chacun desdits poteaux(2, 2', 2", 2"'), pour un accouplement réciproque solide de ces derniers au moyen d'une vis (18) ou autre ;
où lesdits premiers moyens d'ancrage (7) comprennent au moins une paire d'étriers (24, 24') et un moyen (26) pour raccorder de façon amovible ces derniers au bord périphérique (6') des étagères dudit premier type (5, 5', 5"), chacun desdits étriers (24, 24') comprenant une première plaque (25) qui s'étend, sur la structure assemblée, dans une direction substantiellement longitudinale et une deuxième plaque (26) spécialement façonnée dépassant transversalement de ladite première plaque (25) pour soutenir ledit bord périphérique (6') des étagères dudit premier type (5, 5', 5").

2. Structure selon la revendication 1, **caractérisée en ce que** lesdits premiers moyens d'ancrage raccordés (7) comprennent une pluralité de premiers éléments d'ancrage raccordés (12) associés à chacun desdits poteaux(2, 2', 2", 2"') et disposés au-dessus de chacune desdites parois longitudinales (3, 4) le long de premières rangées substantiellement longitudinales respectives (13) pour définir, sur la structure assemblée, des séries (14) desdits premiers éléments (12) dans une relation substantiellement transversalement alignée.

3. Structure selon la revendication 2, **caractérisée en ce que** lesdits premiers moyens d'ancrage (7) comprennent une pluralité de deuxièmes éléments d'ancrage (15) associés audit bord périphérique (6') des étagères dudit premier type (5, 5', 5") et adaptés pour être accouplés par emboîtement avec des premiers membres respectifs (12) d'une série (14).

4. Structure selon l'une quelconque des revendications précédentes, **caractérisée en ce que** lesdits deuxièmes moyens d'ancrage (9) comprennent pour chacune desdites parois longitudinales (3, 4) desdits poteaux (2, 2', 2", 2"'), une pluralité de premiers trous débouchants (18) et/ou fentes (17), alignés longitudinalement et alternant avec des premiers éléments d'ancrage (12) des premières rangées longitudinales (13) respectives.

5. Structure selon la revendication 4, **caractérisée en ce que** lesdits deuxièmes moyens d'ancrage (9) comprennent une pluralité de deuxièmes trous débouchants (19) et/ou fentes (20) formés sur le bord périphérique (10) de ladite au moins une des étagères (8, 8', 8") dudit deuxième type et adaptés pour être alignés transversalement sur les trous débouchants (16) respectifs et/ou fentes (17) desdits poteaux (2, 2', 2", 2'").

6. Structure selon l'une des revendications 3 à 5, **caractérisée en ce que** lesdits premiers moyens d'ancrage (7) sont du type mâle/femelle, lesdits premiers éléments d'ancrage (12) comprenant des fentes façonnées respectives définissant des éléments femelle respectifs, lesdits deuxièmes éléments d'ancrage (15) comprenant des saillies transversales respectives (23) définissant des éléments mâles respectifs Conçus pour être introduits à l'intérieur des fentes femelles (12) façonnées correspondantes.

7. Structure selon la revendication 6, **caractérisée en ce que** chacune desdites fentes façonnées (12) est allongée longitudinalement et substantiellement symétrique par rapport à l'axe transversal (X) avec des portions terminales (12", 12"'), effilées dans des directions opposées pour permettre un positionnement renversé des poteaux respectifs (2, 2', 2", 2"').

8. Structure selon la revendication 6 ou 7, **caractérisée en ce qu'**au moins une paroi (4) d'au moins un desdits poteaux (2, 2', 2", 2"') comprend une deuxième rangée substantiellement longitudinale (21) desdits premiers éléments d'ancrage (12) et/ou desdits premiers trous débouchants (16) et/ou fentes (17), ladite deuxième rangée (21) étant transversalement décalée par rapport à la première rangée correspondante (13).

9. Structure selon la revendication 8, **caractérisée en ce qu'**au moins un desdits premiers trous (16) de ladite deuxième rangée (21) est transversalement alignée sur les premiers trous (16) des deux premières rangées (13) d'un poteau (2).

10. Structure selon la revendication 8 ou 9, **caractérisée en ce que** ladite deuxième rangée (21) comprend au moins une fente substantiellement longitudinale (17) au moins partiellement transversalement alignée sur une paire de premiers éléments d'ancrage successifs (12) de la première rangée (13) qui font partie de la même paroi (4).

11. Structure selon l'un quelconque des revendications 3 à 10, **caractérisée en ce que** chacun des étriers (24, 24') présente lesdits deuxièmes éléments d'ancrage (15).
